# EUROPEAN PATENT APPLICATION

(11) **EP 4 696 460 A1**
(43) Date of publication of application: **18.02.2026**
(21) Application number: 24194853.8
(22) Date of filing: 16.08.2024
(51) Int. Cl.: B25B 29/02, F16B 2/00, F16B 5/02, F16B 13/00

(54) **SHIM IMPRINTING TOOL**

(71) Applicant: Siemens Gamesa Renewable Energy A/S, 7330 Brande (DK)
(72) Inventor: The designation of the inventor has not yet been filed
(74) Representative: SGRE-Association

(57) **Abstract**

The invention describes a shim imprinting tool (10) dimensioned to fit over a stud bolt (24) prior to tightening a nut (26) on that stud bolt (24), which shim imprinting tool (10) comprises an upper assembly (101) adapted to engage with the stud bolt (24), and comprising a means (101C) of exerting an outwardly-directed axial force (Fᵢₘₚ, Fₚᵣₑ) on the stud bolt (24); which upper assembly (101) is mounted on a lower assembly (102) adapted to transfer a complementary axial force (Fᵢₘₚ, Fₚᵣₑ) against the surface (21S) from which the stud bolt (24) protrudes, the lower assembly (102) further comprising a lower face (10F) arranged to contact that surface (21S), and wherein the area (A_{10F}) of the annular lower face (10F) corresponds to the contact area (A₂₆) of the stud bolt nut (26). The invention further describes a friction shim imprinting arrangement (1) for use in forming a bolted joint (2), comprising a plurality of such shim imprinting tools (10); and a method of assembling a bolted joint (2) using such a friction shim imprinting arrangement (1) .

## Description

### Background

Many types of machine comprise rotary components connected by a bolted joint. The bolted joint should transfer torque as efficiently as possible from one component to the other. Various design parameters are relevant in such a bolted joint, for example a large bolt size and a suitably dense bolt distribution can contribute favourably to torque transfer. In addition, various steps can be taken to improve contact between the mating surfaces of the components. For example, Coulomb friction between the mating surfaces can be increased by roughening or otherwise treating the surfaces. However, the mating surfaces can become worn over time, reducing the friction coefficient. In another approach, one or both mating surfaces can be metalized, i.e. given a coating of softer metal, which will seize during operation of the machine. However, contaminants such as dust or oil can enter between the mating surfaces, reducing the contact between the components.

In another approach, a friction shim can be placed between the mating surfaces of the bolted joint. A friction shim can comprise a thin but rigid substrate, and an even distribution of very small but hard particles partially embedded on both sides of the substrate. The exposed portions of the shim particles have an average height in the order of a few tens of micrometres. The friction shim has a pattern of circular holes, corresponding to the bolt distribution pattern of the joint. When assembling the bolted joint, the bolts are generally preloaded to a force that should be sufficient to maintain contact between the components during operation of the machine. The bolt preload force partially embeds the hard particles of the friction shim in the mating faces of the components, creating an interference fit. A good interference fit makes it possible to transmit significantly higher torque between the rotary components, compared to the other options described above.

The effectiveness of the interference fit depends on the level of penetration of the hard particles for a given particle density. Each hard particle of the friction shim creates a small indention, pit or cavity in the surface into which it is pressed. The possible dimensions of a cavity - i.e. its depth and width - are determined by the shape and size of the corresponding friction shim particle. However, when such a bolted joint is assembled using conventional tools, regions of the friction shim - particularly in the annular regions about the bolts - may be insufficiently pressed against the mating surfaces. In these regions, the friction shim particles create only shallow cavities, and the insufficient cavity depths reduce the effectiveness of the friction shim.

It is therefore an object of the invention to provide a way of improving the interference fit of a friction shim in such a bolted joint.

This object is achieved by the claimed shim imprinting tool, by the claimed friction shim imprinting arrangement and by the claimed method of assembling such a bolted joint.

### Description

The claimed shim imprinting tool is used during assembly of the type of bolted joint described above, i.e. two rotary components joined by stud bolts, with a friction shim between the mating faces of the components. The components can be rotary components of a wind turbine drivetrain, for example a low-speed shaft and a coupling interface to a gearbox. The components shall be understood to have matching axial holes to receive the stud bolts. The outer ends of the stud bolts, protruding from the outer surface of one of the components, are stretched using a tensioner or "puller". In a final assembly stage, nuts placed over the outer ends of the stud bolts are tightened to the desired preload force.

According to the invention, the shim imprinting tool is dimensioned to fit over a threaded outer end of a stud bolt prior to tightening a nut on that stud bolt. The inventive shim imprinting tool comprises an upper assembly comprising an inner threaded sleeve to engage with the threaded outer end of the stud bolt and a means of exerting an outwardly-directed axial force on the stud bolt (i.e. a force directed outwards or "away from" the outer surface of the joint). The upper assembly is mounted on a lower assembly or "bridge" which is shaped to transfer a complementary axial force against the surface from which the stud bolt protrudes. The lower assembly further comprises an annular lower face arranged to contact the outer surface. In the inventive shim imprinting tool, the area of the annular lower face does not exceed the contact area between the stud bolt nut and the outer surface.

Since the shim imprinting tool must fit over the threaded outer end of the stud bolt, and since the force exerting means requires room inside the upper assembly, the width of the upper assembly will significantly exceed the width of the stud bolt. A conventional tensioning tool or "puller" also includes a nut rotator to tighten the nut when the bolt has been stretched to the desired extent. An essentially cylindrical prior art tensioning tool can therefore have a width or diameter that is about twice the diameter of the stud bolt nut. The upper assembly of the inventive shim imprinting tool can have a similar width. However, the inventive shim imprinting tool is constructed so that the annular lower face of its lower assembly has an area which does not exceed the contact area of the stud bolt nut. Therefore, an advantage of the inventive shim imprinting tool is that a favourably high complementary or inwardly-directed axial force is applied to the mating surfaces within a corresponding annulus immediately enclosing the stud bolt. As a result, the friction shim particles can be embedded or "imprinted" within each such annulus to form advantageously deep cavities in the mating surfaces of the components. The favourable penetration depth of the shim particles in these regions significantly increases the capacity of the friction shim to transmit shear force between the components of the bolted joint.

The inventive friction shim imprinting arrangement comprises a plurality of the inventive shim imprinting tools, and an actuator assembly adapted to simultaneously actuate the force exertion means of the shim imprinting tools in place over the threaded outer ends of a number of stud bolts.

The inventive method of assembling such a bolted joint comprises arranging a friction shim between the components; inserting stud bolts through holes provided in the components, for example by inserting the stud bolts through axial holes provided in the first component, and threading the stud bolts into tapped holes provided in the second component. In a subsequent step, shim imprinting tools of the inventive friction shim imprinting arrangement are placed over the threaded outer ends of a set of stud bolts, and the actuator assembly is actuated to generate an axial force of a magnitude sufficient to imprint the friction shim to a desired particle depth.

The inventive bolted joint is formed using such a method. The dimensions of the components and stud bolts shall be understood to be large enough to warrant stretching the bolts in order to achieve a desired preload force. For example, the diameter of the bolted joint can be in the order of 1 m, and the components can be joined using about twenty M60 stud bolts. The friction shim between the components of the bolted joint can be a nickel-coated steel plate, with diamond particles partially embedded on both sides. After imprinting the friction shim using the inventive method, cavities in the mating surfaces of the components have a depth approaching the exposed height of the shim particles.

Particularly advantageous embodiments and features of the invention are given by the dependent claims, as revealed in the following description. Features of different claim categories may be combined as appropriate to give further embodiments not described herein.

The invention can be applied to various kinds of bolted joint. In the following, without restricting the invention in any way, it may be assumed that the bolted joint connects a low-speed shaft and a coupling stage of a wind turbine drivetrain.

Without restricting the invention in any way, the first component may be assumed to be the coupling unit, and the second component may be assumed to be the low-speed shaft. It shall be assumed that the stud bolts are threaded into axial blind holes formed in the low-speed shaft. The outer surface of the coupling unit, which faces in the downwind direction, may be assumed to be the surface against which the stud bolt nuts are tightened.

The friction shim between the components of the bolted joint can be a nickel-coated steel plate with embedded diamond particles. Alternatively, the friction shim can be a rigid plate with a dense arrangement of "micro-spikes" on both sides.

As explained above, the upper assembly comprises a sleeve with an inner thread so that it can be threaded into the outer end of a stud bolt. The upper assembly also comprises a "puller" connected to the threaded sleeve, i.e. some means of exerting the outwardly-directed axial force on the stud bolt. In a particularly preferred embodiment of the invention, the puller can be realised as a hydraulic apparatus comprising one or more hydraulic cylinders. In a particularly preferred embodiment of the invention, the puller is realised as a load cell connected to the inner sleeve. The load cell comprises a fluid-filled chamber, and a load piston that can be actuated to generate pressure in the fluid. The chamber is formed so that the pressurized fluid exerts the outwardly-directed axial force on the sleeve and, consequently, on the stud bolt.

Since the upper assembly is mounted on the lower assembly or "bridge", the pressurized fluid results in an inwardly-directed axial force which is transferred through the lower annular face of the shim imprinting tool into the components of the joint, which are pressed with force towards each other, thereby embedding the friction shim particles into the mating surfaces of the components.

In such an embodiment, the actuator assembly comprises a hydraulic circuit adapted to convey pressurized fluid to the load cell. As will be known to the skilled person, such a hydraulic circuit may comprise an accumulator, a reservoir, various fluid lines and valves, and a controller to regulate the valves as required in order to generate pressure in the fluid-filled chambers of the load cells during an imprinting or tensioning step, and to subsequently relieve pressure in the fluid-filled chambers.

In a particularly preferred embodiment of the invention, the actuator assembly is realized to generate an outwardly-directed axial force and an equal and opposite "imprinting force" that exceeds the bolt's final resting preload force by at least 15%, more preferably by at least 25%. The larger force ensures that the friction shim particles can be embedded to a very favourable depth into the mating surfaces of the components.

A bolted joint of a wind turbine drivetrain as described above can comprise a relatively large number of stud bolts in an annular arrangement. It may be desirable to preform the step of friction shim imprinting for all stud bolts. This can be done in a number of stages, for example shim imprinting tools can be placed over a quarter of the stud bolts to perform the friction shim imprinting step, and this can be repeated up to three times for the remaining stud bolts.

Preferably, at least four shim imprinting tools are deployed over four equidistant stud bolts during each friction shim imprinting step.

The inventive shim imprinting tool can be constructed in a number of ways. In a first embodiment, the lower assembly or bridge comprises an essentially conical shape and tapers from the width of the upper assembly to the width of its annular lower face. In this embodiment, the lower assembly accommodates the stud bolt shaft, but not the stud bolt nut. During a friction shim imprinting step, the inwardly-directed axial force is transferred from the load cell directly through the body of the lower assembly and into the first component, concentrating the inwardly-directed axial force in an annular region immediately surrounding the stud bolt, over an area corresponding to the area of the (not yet installed) stud bolt nut. After completion of the friction shim imprinting step, the inventive shim imprinting tool is removed. The stud bolt nut can then be threaded onto the stud bolt (following an optional step of placing a washer about the stud bolt), and a conventional tensioning tool with nut rotator is used to stretch the bolt to its preload force and to tighten the stud bolt nut.

In an alternative embodiment, the shim imprinting tool is based on the design of a conventional tensioning tool which, as explained above, has a straight cylindrical shape dimensioned to fit about a nut already threaded onto a stud bolt. In this embodiment, the lower assembly of the shim imprinting tool includes a cylindrical bridge and also an annular adapter or supporting plate upon which the cylindrical bridge is placed. The supporting plate can have any shape, as long as it terminates at the annular lower face which contacts the outer surface and which, as described above, has an area that does not exceed the contact area of the stud bolt nut. The plate can be in the form of a thick washer with an underside that tapers towards the annular lower face. For example, the width of an annular plate can taper from the width of the cylindrical bridge to the significantly smaller diameter of its annular lower face. The height of the annular plate is preferably less than the height of a stud bolt nut.

In this embodiment, the cylindrical bridge is shaped to fit over a stud bolt nut previously threaded onto the stud bolt, and includes a nut rotator for turning a nut about the stud bolt. In a first step of the inventive method, the friction shim imprinting step is performed by actuating the axial force exertion means. The resulting inwardly-directed axial force is transferred from the load cell through the body of the bridge, through the body of the supporting plate and into the components of the joint, again concentrating the inwardly-directed axial force in an annular region immediately surrounding the stud bolt, over an area corresponding to the area of the stud bolt nut. This is made possible by the smaller contact face on the underside of the adapter plate. If the imprinting force exceeds the bolt preload force, the load cell is actuated to relieve the pressure until the axial force reduces to the bolt preload level. The method can then proceed with a step of tightening the already installed stud bolt nut. The shim imprinting tool can then be removed, leaving the annular plate to serve as a washer underneath the stud bolt nut.

Alternatively, the friction shim imprinting step can be done in a manner similar to the first embodiment, followed by steps of removing the supporting plate, threading a nut onto the stud bolt, and using the shim imprinting tool again (without the supporting plate) in the manner of a conventional tensioner to stretch the stud bolt and to tighten the nut to the desired preload force.

The components can initially be joined by provisionally tightening nuts over a first subset of the stud bolts. The friction shim imprinting procedure can then be performed for a second subset of the bolts using the inventive imprinting arrangement as described above, and completing this step by tightening the nuts to the desired preload over that subset of bolts. The provisionally tightened nuts over the first subset of bolts can then be removed, and the same friction shim imprinting procedure can then be performed for that first subset of bolts.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 and Figure 2 show exemplary embodiments of the inventive shim imprinting tool;
Figure 3 and Figure 4 show perspective views of the embodiments of Figure 1 and Figure 2;
Figure 5 and Figure 6 show exemplary embodiments of the inventive friction shim imprinting arrangement;
Figure 7 compares the annular face at the base of the inventive shim imprinting tool with the contact face of a stud bolt nut;
Figure 8 shows a prior art tensioning tool.

In the diagrams, like numbers refer to like objects throughout. Objects in the diagrams are not necessarily drawn to scale.

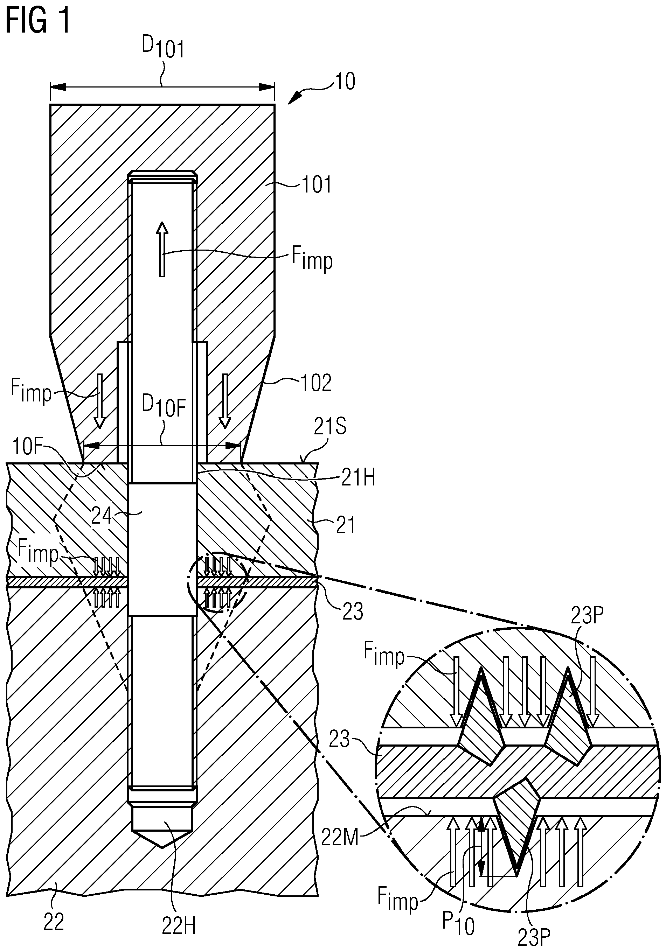

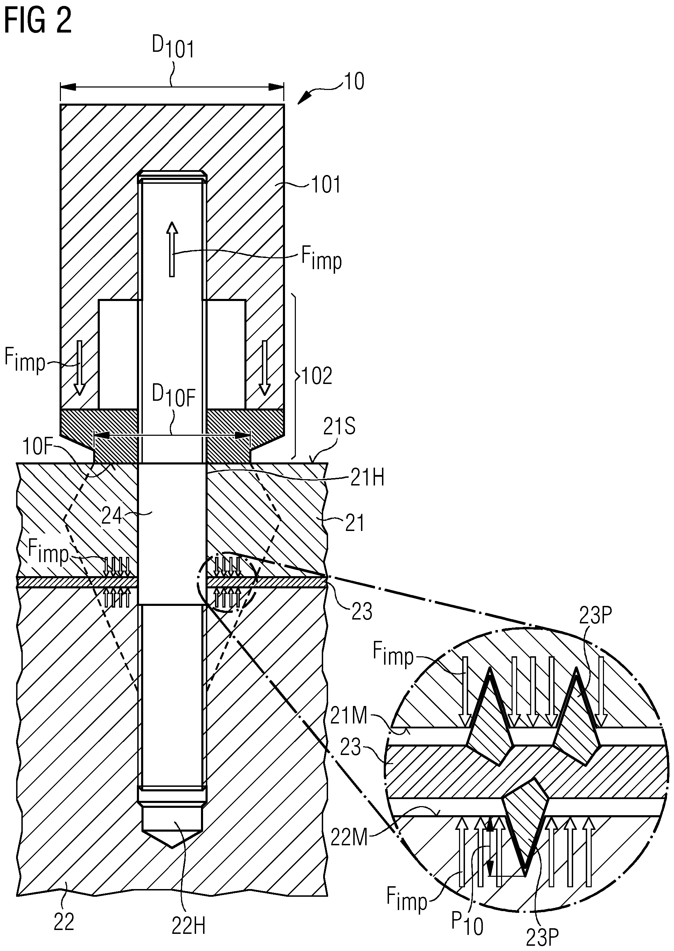

Figure 1 and Figure 2 show embodiments of the inventive shim imprinting tool 10, as it may be used to prepare a bolted joint. The schematic drawings show two components 21, 22 which will be connected by a set of bolts 24 (one bolt is shown in the diagram). A friction shim 23 is positioned between the components 21, 22. The first component 21 can be the coupling stage of a wind turbine drivetrain; the second component 22 can be the low-speed shaft of the drivetrain.

Each diagram shows a tapped hole 22H in the second component 22 and a through-hole 21H in the first component 21 to receive the bolt 24, which protrudes from the outer surface 21S of the first component 21.

The shim imprinting tool 10 has an upper assembly 101 which engages with the threaded outer end of the bolt 24, and a lower assembly 102 with an annular lower face 10F in contact with the outer surface 21S of the first component 21.

In the exemplary embodiment of Figure 1, the lower assembly 102 of the shim imprinting tool 10 has an essentially conical shape, tapering from the width D₁₀₁ of the upper assembly 101 to the width D_{10F} of its lower face 10F. The surface area of the lower face 10F of the shim imprinting tool 10 is comparable to the surface area of a nut which will later be threaded onto the bolt 24.

In the exemplary embodiment of Figure 2, the lower assembly 102 of the shim imprinting tool 10 has the shape of a straight cylinder, and rests on an annular adapter 104 or annular support plate 104. The upper surface of the annular plate 104 is wide enough to receive the lower assembly 102, and the plate 104 tapers in the downward direction to a smaller width D_{10F} so that the surface area of the lower face 10F of the annular plate 104 is comparable to the surface area of a nut which will later be threaded onto the bolt 24.

During a friction shim imprinting step, the shim imprinting tool 10 is actuated to apply an outwardly-directed axial force Fᵢₘₚ to the stud bolt 24. An equal and opposite force Fᵢₘₚ is directed through the lower assembly 102, through the contact surfaces 10F, 21S, and into the components 21, 22 and shim 23.

As shown in the diagrams, pressure transfer from the lower face 10F of the imprinting tool 10 into the components 21, 22 is determined by a "compression cone" 24C. At the junction between the components 21, 22, the intersection of the compression cone with the mating surfaces 21M, 22M has essentially the same diameter D_{10F} as the lower face 10F of the imprinting tool 10, so that the imprinting force Fᵢₘₚ is concentrated in a corresponding annulus with a favourably small area.

The relatively small surface area of the lower face 10F results in a concentration of the inwardly-directed axial force Fᵢₘₚ, i.e. a significantly higher force per unit area is achieved, so that the shim particles 23P are pushed or "imprinted" further into the mating faces of the components 21, 22. This is indicated in the (greatly simplified) enlarged portion in each diagram. The particles 23P are pressed to a favourable depth P₁₀ in each mating face 21M, 22M. The diamond particles 23P (or micro-spikes) of a friction shim 23 can be embedded to a very favourable depth P₁₀ of 90% or more of their height using the inventive shim imprinting tool 10.

The compression cone 24C established during the shim imprinting stage is essentially the same as the compression cone 24C that will be established by the final fastening hardware (e.g. nut and washer). However, during the imprinting procedure, the axial force Fᵢₘₚ can be considerably larger than the preload force Fₚᵣₑ, so that the shim particles 23P are more effectively pressed into the mating surfaces 21M, 22M.

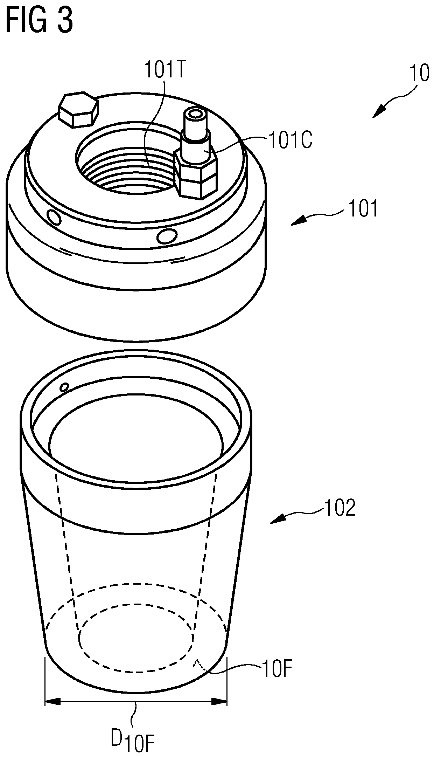

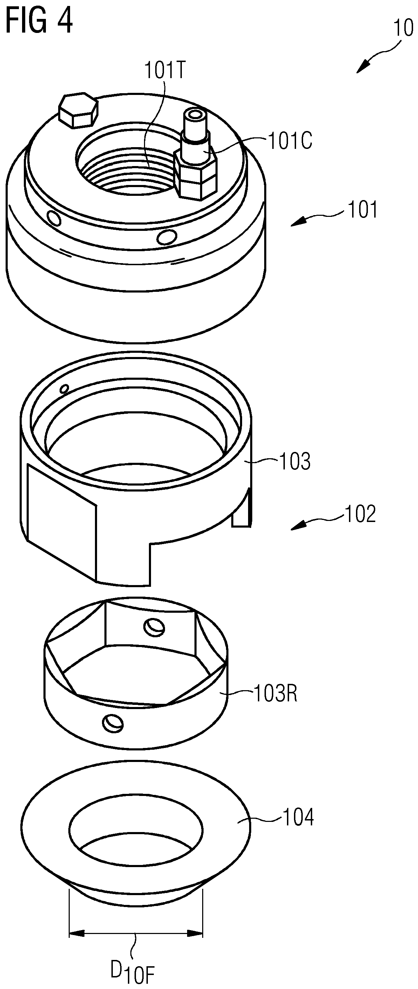

Figures 3 and 4 are perspective views of the shim imprinting tools 10 of Figures 1 and 2. As shown in Figure 3, the shim imprinting tool 10 has an upper assembly 101 comprising a threaded part 101T to engage with the threaded outer end of the bolt 24, and a hydraulic load cell 101C to push the bolt 24 outwards. The lower assembly 102 or "bridge" has a tapered form so that its diameter reduces towards a smaller annular lower face 10F. With this shape, the bridge 102 ensures that the imprinting force Fᵢₘₚ will be concentrated over a smaller area, achieving the desired particle imprint depth P₁₀.

In Figure 4, the shim imprinting tool 10 has the same type of upper assembly 101, i.e. a threaded part 101T to engage with the threaded outer end of the bolt 24, and a hydraulic load cell 101C to push the bolt 24 outwards. Here, the lower assembly 102 comprises an essentially cylindrical bridge 103 which rests on the supporting plate 104. On its underside, the plate 104 tapers towards the smaller annular lower face 10F so that the imprinting force Fᵢₘₚ will be concentrated over a smaller area, achieving the desired particle imprint depth P₁₀.

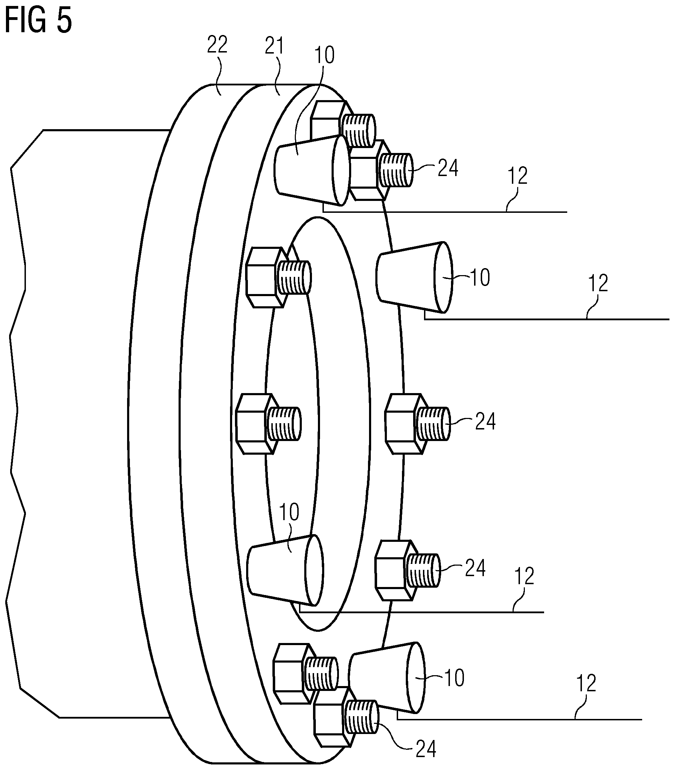

Figure 5 shows, in greatly simplified form, an exemplary embodiment of the inventive friction shim imprinting arrangement 1, and shows several shim imprinting tools 10 in place over stud bolts 24 of a joint 2. A friction shim 23 may be assumed to be in place between the components 21, 22 of the joint 2. The second component 22 can be the flange of the main shaft of a wind turbine drivetrain, while the first component 21 can be the flange of a coupling part.

The diagram shows fluid lines 12 of a hydraulic circuit 11, which conveys pressurized fluid between an accumulator and the load cells 101C of the shim imprinting tools 10. In this diagram, the shim imprinting tools 10 are those of Figure 1 and Figure 3 (as represented by the simple conical shape), and are being used to imprint the particles of the friction shim 23 into the mating faces of the components 21, 22. Once this step is complete, the shim imprinting tools 10 are removed, nuts are placed over the stud bolts 24, and conventional tensioning tools can be used to preload the bolts 24 and tighten the nuts.

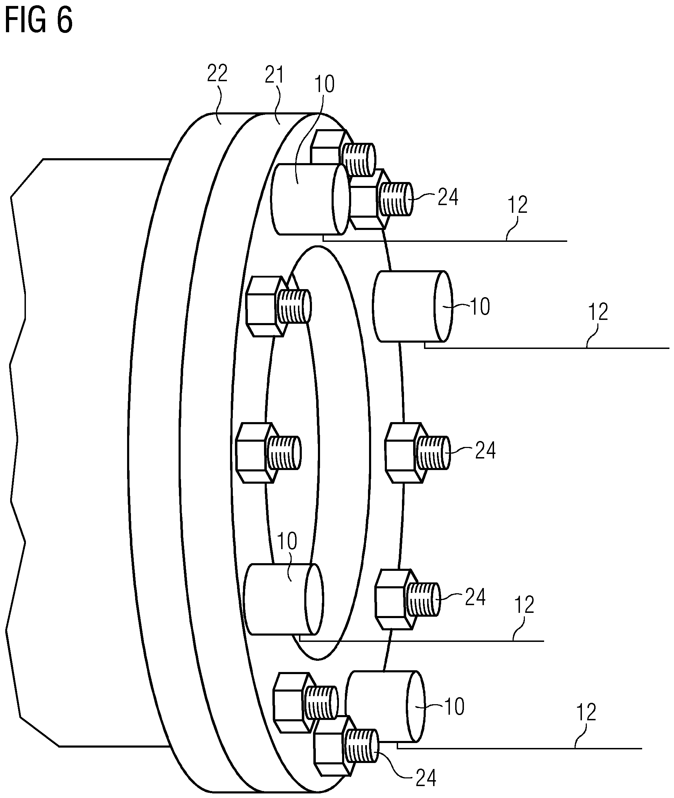

Figure 6 shows a similar configuration, using the shim imprinting tools 10 of Figure 2 and Figure 4 (as represented by the simple cylindrical shape) to imprint the particles of the friction shim 23 into the mating faces of the components 21, 22. Here, the "conventional part" of the shim imprinting tool 10 rests on the annular plate 104, which - when the hydraulic circuit is actuated - concentrates the imprinting force Fᵢₘₚ generated by each load cell 101C into the smaller contact area 10F as explained above. After completing the shim imprinting step, the shim imprinting tools 10 can be lifted off to remove the annular plates 104, prior to deploying the shim imprinting tools 10 again to preload the bolts 24 and tighten the nuts. Alternatively, the shim imprinting tools 10 can be left in place, so that the annular plates 104 serve as washers underneath the nuts 26, and the shim imprinting tools 10 are deployed again to preload the bolts 24 and tighten the nuts 26.

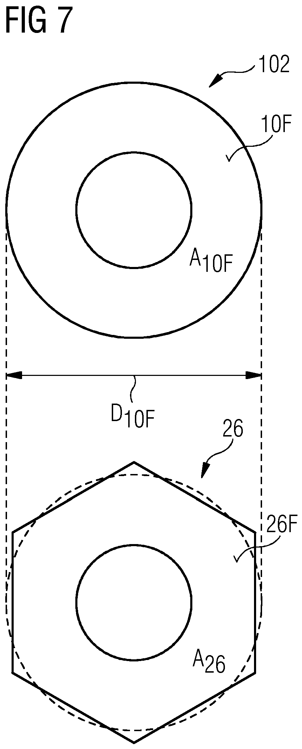

Figure 7 shows the annular face 10F at the base of the inventive shim imprinting tool 10, compared to the contact face of a stud bolt nut 26. As can be seen from the diagram, the area A_{10F} of the annular face 10F is similar to the area A₂₆ of the contact face of the nut 26.

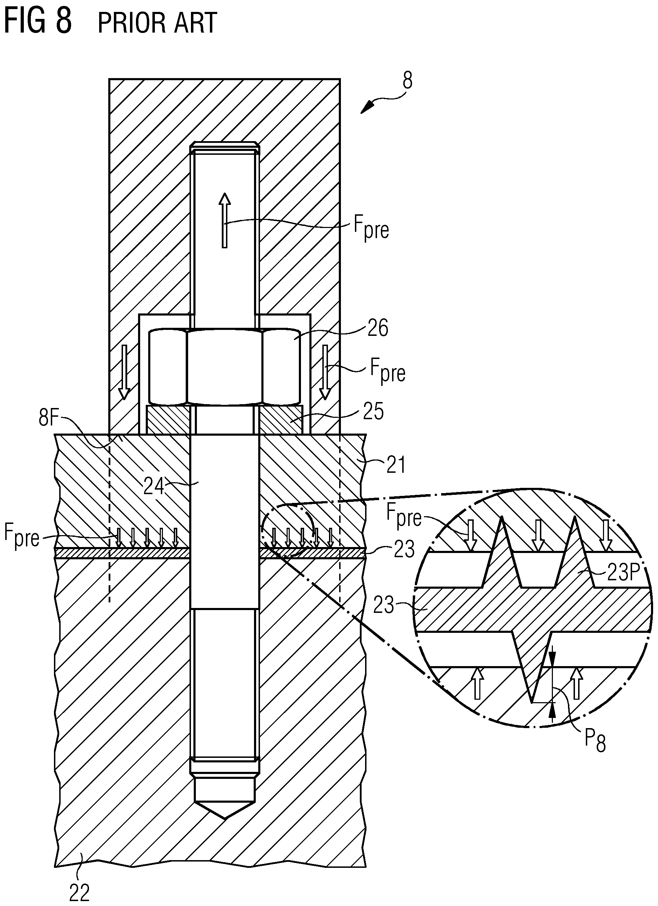

Figure 8 shows a prior art approach. Here, a tensioning tool 8 is used to stretch the bolt 24 of a joint comprising a friction shim 23 between two components 21, 22 as described above. A load cell of the tensioning tool 8 pulls the bolt outward, exerting an outwardly-directed axial force Fₚᵣₑ on the bolt and a complementary force Fₚᵣₑ in the inward direction. The essentially cylindrical prior art tensioning tool 8 for metric bolts can have a diameter in the order of 50 - 60 cm, so that it can fit about the stud nut 26. As a result, its annular contact face 8F has a relatively large area, so that only a "diluted" axial Fpre is available to press the shim particles into the mating faces 21M, 22M. As a result, the particles 23P can only form relatively shallow cavities, to a depth P₈ that is significantly less than the particle depth P₁₀ which is achieved by the inventive shim imprinting tool 10. For example, the diamond particles or micro-spikes of a friction shim may only be embedded up to 75% of their height using the prior art tensioning tool 8.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A shim imprinting tool (10) dimensioned to fit over a stud bolt (24) prior to tightening a nut (26) on that stud bolt (24), which shim imprinting tool (10) comprises
- an upper assembly (101) adapted to engage with the stud bolt (24), and comprising a means (101C) of exerting an outwardly-directed axial force (Fᵢₘₚ, Fₚᵣₑ) on the stud bolt (24); which upper assembly (101) is mounted on
- a lower assembly (102) adapted to transfer a complementary axial force (Fᵢₘₚ, Fₚᵣₑ) against the surface (21S) from which the stud bolt (24) protrudes, the lower assembly (102) further comprising a lower face (10F) arranged to contact that surface (21S), and wherein the area (A_{10F}) of the annular lower face (10F) corresponds to the contact area (A_{26F}) of the stud bolt nut (26).

2. A shim imprinting tool according to the preceding claim, wherein the lower assembly (102) comprises an essentially conical shape and tapers from the width (D₁₀₁) of the upper assembly (101) to the width (D_{10F}) of its lower face (10F) .

3. A shim imprinting tool according to any of the preceding claims, wherein the lower assembly (102) comprises a supporting plate (104) and a cylindrical module (103) arranged between the upper assembly (101) and the supporting plate (104), and wherein the width of the supporting plate (104) tapers from the width (D₁₀₁) of the upper assembly (101) to the width (D_{10F}) of the annular lower face (10F).

4. A shim imprinting tool according to the preceding claim, wherein the height of the annular plate (104) is less than the height of a stud bolt nut (26).

5. A shim imprinting tool according to any of the preceding claims, wherein the lower assembly (102) is dimensioned to enclose a stud bolt nut (26) threaded onto a stud bolt (24), and wherein the shim imprinting tool (10) comprises a means (103R) of tightening the stud bolt nut (26).

6. A shim imprinting tool according to any of the preceding claims, wherein the means of exerting the outwardly-directed axial force (Fᵢₘₚ, Fₚᵣₑ) comprises a hydraulic load cell (101C).

7. A friction shim imprinting arrangement (1) for use in forming a bolted joint (2) comprising a first component (21), a second component (22), a friction shim (23) arranged between the components (21, 22), and a plurality of stud bolts (24) arranged to connect the components (21, 22), which friction shim imprinting arrangement (1) comprises
- a plurality of shim imprinting tools (10) according to any of claims 1 to 6; and
- an actuator assembly (11) adapted to simultaneously actuate the force exertion means (101C) of the shim imprinting tools (10) in place over the stud bolts (24).

8. A friction shim imprinting arrangement according to the preceding claim, wherein the actuator assembly (11) comprises a hydraulic circuit adapted to convey pressurized fluid to the force exertion means (101C).

9. A friction shim imprinting arrangement according to claim 7 or claim 8, comprising at least four shim imprinting tools (10).

10. A friction shim imprinting arrangement according to any of claims 7 to 9, wherein the actuator assembly (11) is realized to generate an outwardly-directed axial force (Fᵢₘₚ) that exceeds the bolt preload force (Fₚᵣₑ) by at least 15%, more preferably by at least 25%.

11. A method of assembling a bolted joint (2) between a first component (21) and a second component (22), which method comprises
- arranging a friction shim (23) between the components (21, 22);
- inserting stud bolts (24) through holes (21H, 22H) provided in the components (21, 22);
- arranging shim imprinting tools (10) of a friction shim imprinting arrangement (1) according to any of claims 7 to 10 over the outer ends of a number of stud bolts (24); and
- operating the actuator assembly (11) of the friction shim imprinting arrangement (1) to generate an outwardly-directed axial force (Fᵢₘₚ) of a magnitude sufficient to imprint the friction shim (23) to a desired particle depth (P₁₀).

12. A method according to the preceding claim, comprising steps of threading nuts (26) onto the stud bolts (24) and deploying the shim imprinting tools (10) to tighten the nuts (26) .

13. A bolted joint (2) formed using the method according to any of the preceding method claims, comprising an annular arrangement of stud bolts (24) connecting the components (21, 22), and wherein the diameter of a stud bolt (24) is in the order of 60 mm.

14. A bolted joint according to the preceding claim, wherein the first component is a coupling stage (21) of a wind turbine drivetrain, and wherein the second component is the low-speed shaft (22) of the drivetrain.

15. A bolted joint according to claim 13 or claim 14, wherein the supporting plate (104) of the lower assembly (102) of a shim imprinting tool (10) remains in place below a tightened stud bolt nut (26).
